# EUROPEAN PATENT APPLICATION

(11) **EP 4 708 660 A1**
(43) Date of publication of application: **11.03.2026**
(21) Application number: 25198138.7
(22) Date of filing: 26.08.2025
(51) Int. Cl.: H02M 3/335, H02M 3/337, H02M 1/00, H02M 3/00, H01F 27/24

(54) **DC-DC POWER SUPPLY WITH MODULAR TRANSFORMER AND TRANSFORMER ASSEMBLY**

(30) Priority: 27.08.2024 US 202463687522 P
(71) Applicant: Delta Electronics, Inc., Neihu, Taipei 11491 (TW)
(72) Inventor: Phukan, Ripun, Morrisville, NC 27560 (US); Jin, Feng, Morrisville, NC 27560 (US); Wang, Dakai, Morrisville, NC 27560 (US); Barbosa, Peter Mantovanelli, Morrisville, NC 27560 (US)
(74) Representative: Uexküll & Stolberg

(57) **Abstract**

A DC-DC power supply (1) and a transformer assembly are provided. The DC-DC power supply (1) includes primary and secondary circuits (11, 12) and M transformer sets electrically connected in parallel between the primary and secondary circuits (11, 12). Each transformer set includes N transformers (TR1, TR2), where M and N are positive integers. Each transformer (TR1) includes first and second primary windings (P11, P12) and first and second secondary windings (S11, S12). A connection node of the first and second secondary windings (S11, S12) is electrically connected to an output capacitor (Co) of the secondary circuit (12), and each secondary winding (S11, S12) is electrically connected to a corresponding secondary switch (SR11, SR12) of the secondary circuit (12). The first and second primary windings (P11, P12) in each transformer set are electrically connected in series. All transformers (TR1, TR2) are arranged along a first direction (X), and each transformer (TR1) includes a first side column (101), a center column (103) and a second side column (102) arranged along the first direction (X) with each extending along a second direction (Y) perpendicular to the first direction (X).

## Description

### FIELD OF THE INVENTION

The present disclosure relates to a DC-DC power supply and a transformer assembly, and more particularly to a DC-DC power supply with modular transformer and a transformer assembly.

### BACKGROUND OF THE INVENTION

Conventional single-stage DC-DC power supplies face significant challenges when addressing high output current and low voltage applications. Generally, a single large transformer is used for energy conversion, but this approach often results in high losses and poor heat dissipation, particularly in high power density scenarios. Furthermore, as power levels increase, issues such as low-frequency oscillations begin to appear, negatively impacting efficiency and system stability. To overcome these limitations, modular transformers or multiphase current doubler architectures have been explored. However, these approaches come with their own difficulties, including unstable magnetic flux coupling, complex winding designs, and increased production costs, which limit the broader adoption and scalability of such technologies.

Therefore, there is a need of providing a DC-DC power supply with modular transformer in order to overcome the drawbacks of the conventional technologies.

### SUMMARY OF THE INVENTION

The present disclosure provides a DC-DC power supply with modular transformer and a transformer assembly. In the present disclosure, a novel flux cancellation scheme and modular matrix transformer are introduced to offer scalability, reduced ripple flux, and enhanced efficiency.

In accordance with an aspect of the present disclosure, a DC-DC power supply is provided. The DC-DC power supply includes a primary circuit, a secondary circuit and M transformer sets electrically connected in parallel between the primary circuit and the secondary circuit. Each of the M transformer sets includes N transformers, where M and N are positive integers. Each transformer includes a first primary winding, a second primary winding, a first secondary winding and a second secondary winding. A connection node of the first secondary winding and the second secondary winding is electrically connected to an output capacitor of the secondary circuit, and each of the first secondary winding and the second secondary winding is electrically connected to a corresponding secondary switch of the secondary circuit. The first and second primary windings of the N transformers in each of the M transformer sets are electrically connected in series. All M*N transformers of the M transformer sets are arranged along a first direction, and each of the M*N transformers includes a first side column, a center column and a second side column arranged along the first direction with each extending along a second direction, which is perpendicular to the first direction.

In accordance with another aspect of the present disclosure, a transformer assembly configured for a DC-DC power supply with a primary circuit and a secondary circuit is provided. The transformer assembly includes M transformer sets electrically connected in parallel between the primary circuit and the secondary circuit, wherein each of the M transformer sets include N transformers, where M and N are positive integers, wherein each of the transformers includes a first primary winding, a second primary winding, a first secondary winding, and a second secondary winding, a connection node of the first secondary winding and the second secondary winding is electrically connected to an output capacitor of the secondary circuit, and each of the first secondary winding and the second secondary winding is electrically connected to a corresponding secondary switch of the secondary circuit, wherein the first and second primary windings of the N transformers in each of the M transformer sets are electrically connected in series, all M*N transformers of the M transformer sets are arranged along a first direction, and each of the M*N transformers comprises a first side column, a center column, and a second side column arranged along the first direction with each extending along a second direction, which is perpendicular to the first direction.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 is a schematic circuit diagram illustrating a DC-DC power supply according to an embodiment of the present disclosure;
FIG. 2A schematically shows an implementation of the transformers TR1 and TR2 of FIG. 1
FIG. 2B schematically shows sectional views of the primary and secondary windings and columns of FIG. 2A;
FIG. 2C schematically shows operation waveforms in the implementation of FIGS. 2A-2B;
FIG. 3A schematically shows another implementation of the transformers TR1 and TR2 of FIG. 1
FIG. 3B schematically shows sectional views of the primary and secondary windings and columns of FIG. 3A;
FIG. 3C schematically shows operation waveforms in two implementations of FIGS. 2A-2B and FIGS. 3A-3B;
FIG. 4 is a schematic circuit diagram illustrating a DC-DC power supply according to another embodiment of the present disclosure;
FIG. 5A is a schematic circuit diagram illustrating a DC-DC power supply according to another embodiment of the present disclosure;
FIG. 5B is a schematic circuit diagram illustrating a DC-DC power supply according to another embodiment of the present disclosure;
FIG. 6A schematically shows an implementation of the transformers of FIG. 5A and FIG. 5B with the directions of the flux caused by the secondary windings;
FIG. 6B schematically shows sectional views of the secondary windings and columns in the first transformers TR1a and TR2a and the second transformers TR1b and TR2b of FIG. 6A;
FIG. 6C shows the same implementation of FIG. 6A with the directions of the flux caused by the primary windings;
FIG. 6D schematically shows sectional views of the primary windings and columns in the first transformers TR1a and TR2a and the second transformers TR1b and TR2b of FIG. 6C;
FIG. 6E schematically shows operation waveforms in the implementation of FIGS. 6A-6D;
FIG. 7A is a schematic circuit diagram illustrating a DC-DC power supply according to another embodiment of the present disclosure;
FIG. 7B is a schematic circuit diagram illustrating a DC-DC power supply according to another embodiment of the present disclosure;
FIG. 7C schematically shows an implementation of the transformers of each converter of FIG. 7A or 7B;
FIG. 7D schematically shows operation waveforms in the implementation of FIG. 7C;
FIG. 8A schematically shows another implementation of the transformers in FIG. 5A or FIG 5B and takes transformers TR1, TR2, TR3 and TR4 as an example, with the directions of the flux caused by the secondary windings;
FIG. 8B schematically shows sectional views of the secondary windings and columns in the transformers of FIG. 8A;
FIG. 8C shows the same implementation of FIG. 8A with the directions of the flux caused by the primary windings;
FIG. 8D schematically shows sectional views of the primary windings and columns in the transformers of FIG. 8C;
FIG. 8E schematically shows operation waveforms in the implementation of FIG. 8A-8D;
FIG. 9A schematically shows another implementation of the transformers in FIG. 7A or FIG 7B and takes transformers TR1, TR2, TR3 and TR4 as an example, with the directions of the flux caused by the secondary windings;
FIG. 9B schematically shows sectional views of the secondary windings and columns in the transformers of FIG. 9A;
FIG. 9C shows the same implementation of FIG. 9A with the directions of the flux caused by the primary windings;
FIG. 9D schematically shows sectional views of the primary windings and columns in the transformers of FIG. 9C; and
FIG. 9E schematically shows operation waveforms in the implementation of FIG. 9A-9D.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

In the present disclosure, a single-stage DC-DC power supply featuring soft-switched phase shifted full-bridge converter as primary side and current doubler-based rectifier with integrated modular matrix transformer, in direct and inverse coupled configurations, as secondary side is proposed. The matrix transformer features integrated output inductance with optimized commutation path layout. The structure is simple to implement with duty cycle-based control, is bi-directional, and is suitable for high output current applications. Using novel winding and core arrangements, the proposed DC-DC power supply can be scaled to very high current applications with a relatively smaller size. Both Litz and PCB based solutions can be used for implementation.

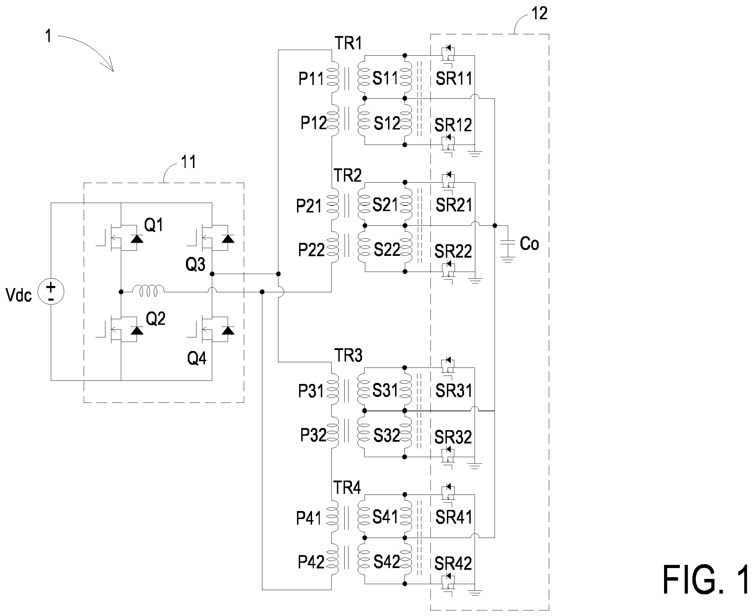

FIG. 1 is a schematic circuit diagram illustrating a DC-DC power supply according to an embodiment of the present disclosure. As shown in FIG. 1, the DC-DC power supply 1 includes a primary circuit 11, a secondary circuit 12, and a plurality of transformers (e.g., TR1, TR2, TR3 and TR4 shown in FIG. 1) coupled between the primary circuit 11 and the secondary circuit 12. In the DC-DC power supply 1, there are M transformer sets, electrically connected in parallel if M>1, and each transformer set includes N said transformers, where M≥1, N≥1 and M+N≥3. As an example, in this embodiment, M=2 and N=2, namely the are two transformer sets electrically connected in parallel, and each transformer set includes two transformers with parallel-connected inputs and parallel-connected outputs.

For example, the primary circuit 11 is a soft-switched phase shifted full-bridge converter. In this embodiment, the primary circuit 11 receives an input voltage Vdc and includes a first primary switch Q1, a second primary switch Q2, a third primary switch Q3 and a fourth primary switch Q4. The first primary switch Q1 and the second primary switch Q2 are electrically connected in series to form a first switch bridge arm, the third primary switch Q3 and the fourth primary switch Q4 are electrically connected in series to form a second switch bridge arm, and the first and second switch bridge arms are electrically connected in parallel.

The transformer TR1 includes a first primary winding P11, a second primary winding P12, two parallel-connected first secondary windings S11, and two parallel-connected second secondary windings S12. Similarly, the transformer TR2 includes a first primary winding P21, a second primary winding P22, two parallel-connected first secondary windings S21, and two parallel-connected second secondary windings S22. The transformer TR3 includes a first primary winding P31, a second primary winding P32, two parallel-connected first secondary windings S31, and two parallel-connected second secondary windings S32. The transformer TR4 includes a first primary winding P41, a second primary winding P42, two parallel-connected first secondary windings S41, and two parallel-connected second secondary windings S42. In the transformer set formed by transformers TR1 and TR2, the first primary winding P11, the second primary winding P12, the first primary winding P21 and the second primary winding P22 are electrically connected in series sequentially between the connection node of the third primary switch Q3 and the fourth primary switch Q4 and the connection node of the first primary switch Q1 and the second primary switch Q2. In the other transformer set formed by transformers TR3 and TR4, the first primary winding P31, the second primary winding P32, the first primary winding P41 and the second primary winding P42 are electrically connected in series sequentially between the connection node of the third primary switch Q3 and the fourth primary switch Q4 and the connection node of the primary switch Q1 and the second primary switch Q2.

The secondary circuit 12 includes a plurality of first secondary switches SR11, SR21, SR31 and SR41 electrically connected to the first secondary windings S11, S21, S31 and S41, respectively, and a plurality of second secondary switches SR12, SR22, SR32 and SR42 electrically connected to the second secondary windings S12, S22, S32 and S42, respectively. Further, the connection node between the first secondary windings and the second secondary windings of each transformer is coupled to an output capacitor Co of the secondary circuit 12. In an embodiment, the transformers include current doubler transformers, and the transformers and the secondary circuit 12 form current doubler rectifiers at the secondary side.

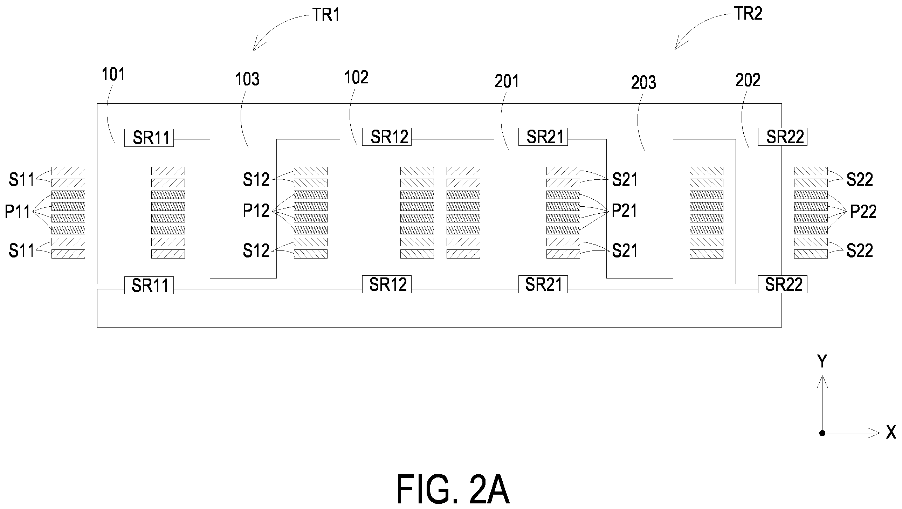

Taking the transformer set formed by transformers TR1 and TR2 as an example, FIG. 2A schematically shows an implementation of the transformers TR1 and TR2 of FIG. 1. As shown in FIG. 2A, the transformers TR1 and TR2 are arranged along a first direction X. The transformer TR1 includes a first side column 101, a center column 103 and a second side column 102 arranged along the first direction X in sequence and disposed between two plates, while each of the first side column 101, the center column 103 and the second side column 102 are extended along a second direction Y, which is perpendicular to the first direction X. In this embodiment, the two first secondary windings S11 and the first primary winding P11 are wound on the first side column 101, and the two second secondary windings S12 and the second primary winding P12 are wound on the second side column 102.

Similarly, the transformer TR2 includes a first side column 201, a center column 203 and a second side column 202 arranged along the first direction X in sequence and disposed between two plates, while each of the first side column 201, the center column 203 and the second side column 202 are extended along the second direction Y. The first side column 201 of the transformer TR2 is neighboring to the second side column 102 of the transformer TR1. In this embodiment, the two first secondary windings S21 and the first primary winding P21 are wound on the first side column 201, and the two second secondary windings S22 and the second primary winding P22 are wound on the second side column 202.

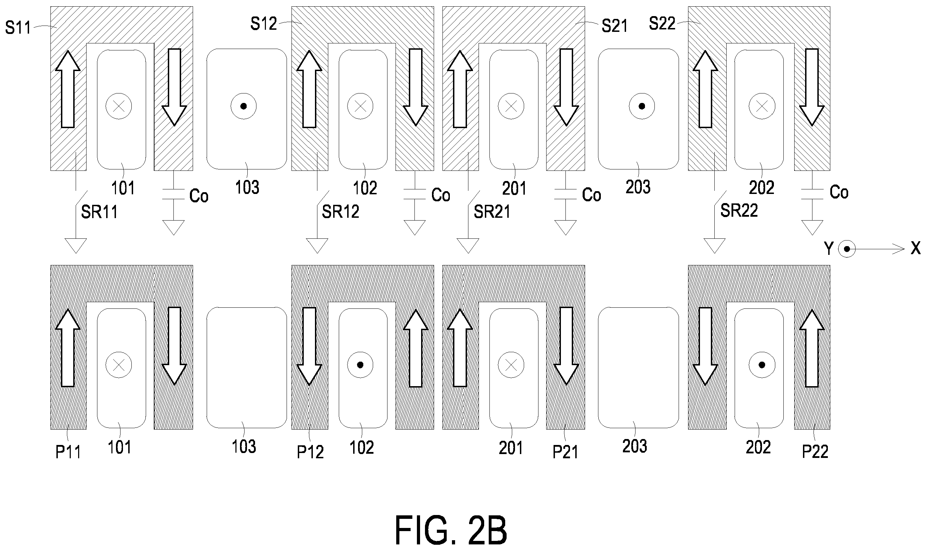

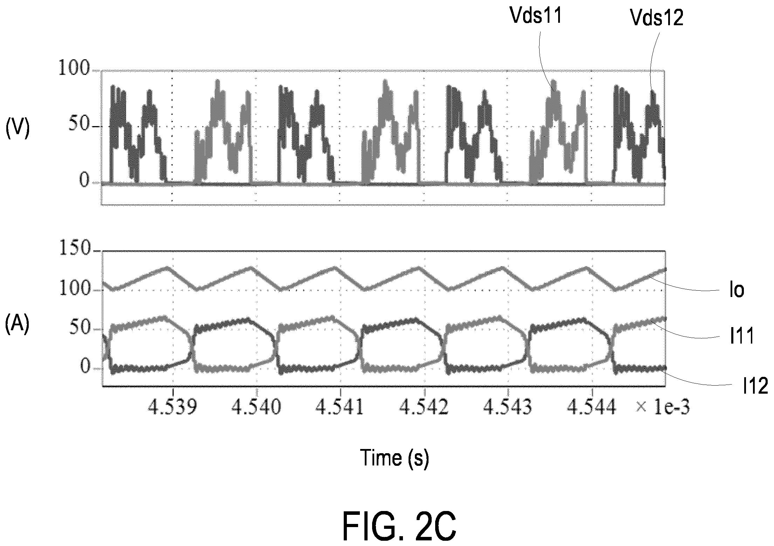

The sectional views of the primary and secondary windings and columns of FIG. 2A are shown in FIG. 2B for illustrating the current and flux directions in the windings and columns. As shown in FIG. 2B, in the transformers TR1 and TR2, all the secondary windings have the same current direction, the first primary windings P11 and P21 have the same current direction, and the second primary windings P12 and P22 have the same current direction. In each of the transformers TR1 and TR2, the first primary winding and the second primary windings have opposite current directions. In addition, taking the transformer TR1 as an example, FIG. 2C schematically shows a drain-to-source voltage Vds11 of first secondary switch SR11, a drain-to-source voltage Vds12 of second secondary switch SR12, a current I11 flowing through the first secondary winding S11, a current I12 flowing through the second secondary winding S12, and an output current Io flowing through the output capacitor Co in the implementation of FIGS. 2A-2B. As shown in FIGS. 2A, 2B and 2C, a low frequency oscillation may stem from coupling between the secondary primary winding P12 of the transformer TR1 and the first primary winding P21 of the transformer TR2.

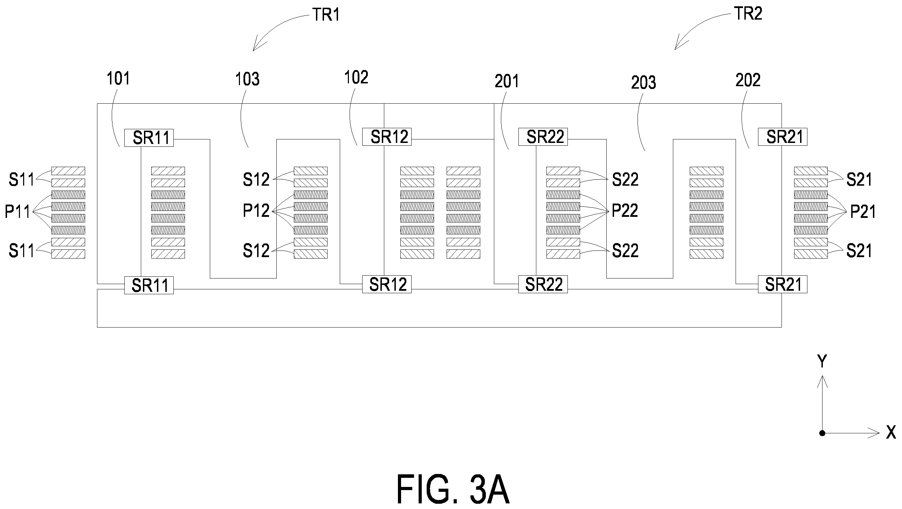

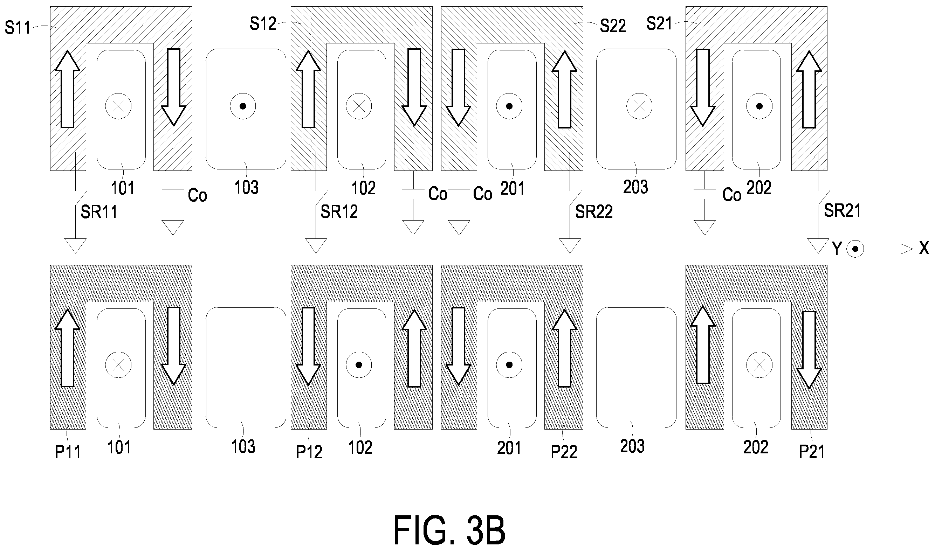

In order to avoid said low frequency oscillation, another implementation of the transformers TR1 and TR2 of FIG. 1 is schematically shown in FIGS. 3A and 3B. The winding way in FIGS. 3A and 3B is different from that in FIGS. 2A and 2B. In FIGS. 2A and 2B, the windings in different transformers are actually wound in the same manner, while in FIGS. 3A and 3B, the windings in different transformers are wound symmetrically to achieve flux cancellation. In specific, as shown in FIGS. 3A and 3B, in the transformer TR2, the two first secondary windings S21 and the first primary winding P21 are wound on the second side column 202, and the two second secondary windings S22 and the second primary winding P22 are wound on the second side column 202. As shown in FIG. 3B, in the transformers TR1 and TR2, the first secondary windings S11 and S21 have opposite current directions, the second secondary windings S12 and S22 have opposite current directions, the first primary windings P11 and P21 have the same current directions, and the second primary windings P12 and P22 have the same current direction. In each of the transformers TR1 and TR2, the first and second primary windings have opposite current directions, and the first and second secondary windings have the same current direction.

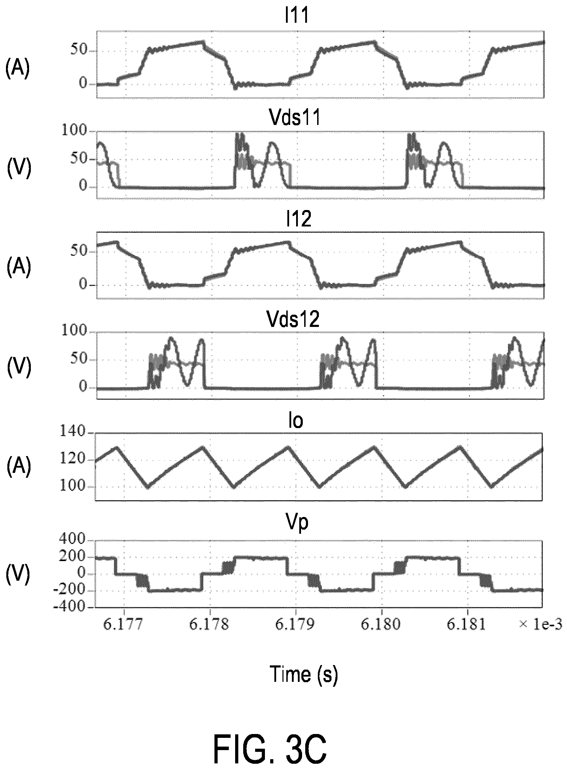

Taking the transformer TR1 as an example, FIG. 3C schematically shows the current I11, the drain-to-source voltage Vds11, the current I12, the drain-to-source voltage Vds12, the output current Io, and a primary voltage Vp at the primary side in two implementations of FIGS. 2A-2B and FIGS. 3A-3B. In FIG. 3C, the waveforms of the implementation of FIGS. 2A-2B are depicted by dark gray lines, and the waveforms of the implementation of FIGS. 3A-3B are depicted by light gray lines. It can be seen from FIG. 3C that the low frequency ringing in the drain-to-source voltage is eliminated by the symmetric arrangements of the secondary windings in two neighboring transformers.

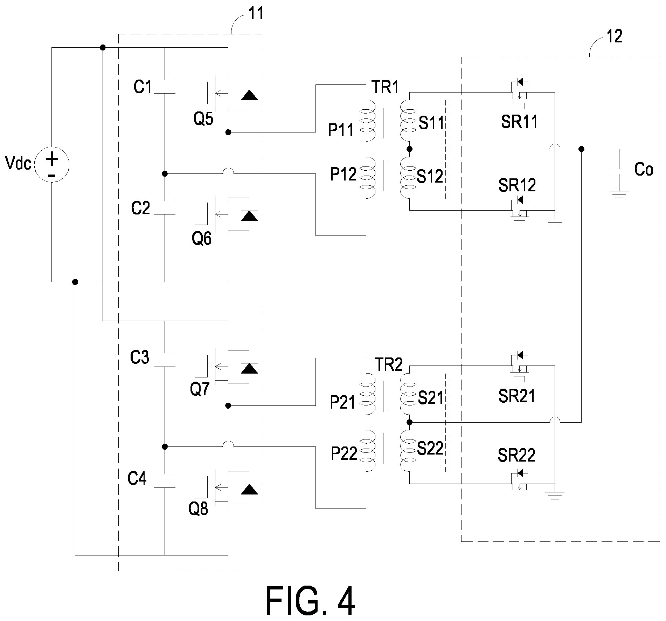

In the above embodiment, the primary circuit includes full-bridge converter. However, the actual implementation of the primary circuit is not limited in the present disclosure. For example, in another embodiment as shown in FIG. 4, the primary circuit 11 is implemented with two half-bridge converters, including a first half-bridge converter and a second half-bridge converter. The first half-bridge converter includes a capacitor bridge arm formed by serially connected capacitors C1 and C2 and a switch bridge arm formed by serially connected switches Q5 and Q6, and the capacitor bridge arm and the switch bridge arm are electrically connected in parallel. Similarly, the second half-bridge converter includes a capacitor bridge arm formed by serially connected capacitors C3 and C4 and a switch bridge arm formed by serially connected switches Q7 and Q8, and the capacitor bridge arm and the switch bridge arm are electrically connected in parallel. In this embodiment, there are two transformers TR1 and TR2 with the structure similar to that in the above embodiments. The difference is that, in this embodiment, the first primary winding P11 and the second primary winding P12 of the transformer TR1 are electrically connected in series between a connection node of the switches Q5 and Q6 and a connection node of the capacitors C1 and C2, and the first primary winding P21 and the second primary winding P22 of the transformer TR2 are electrically connected in series between a connection node of the switches Q7 and Q8 and a connection node of the capacitors C3 and C4. In this embodiment, there are two transformer sets formed by the transformers TR1 and TR2 respectively. While in another embodiment, each transformer set may include more transformers, the connection relations between the transformers in each transformer set are similar with that in the embodiments shown in FIG. 1, and thus the detailed descriptions thereof are omitted herein.

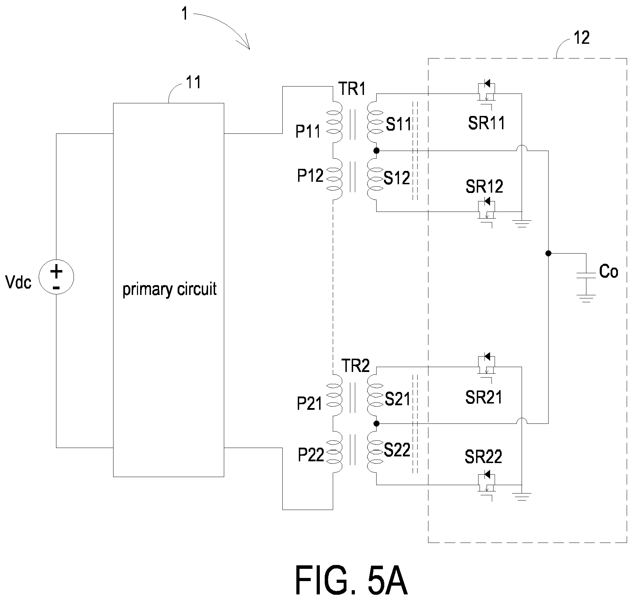

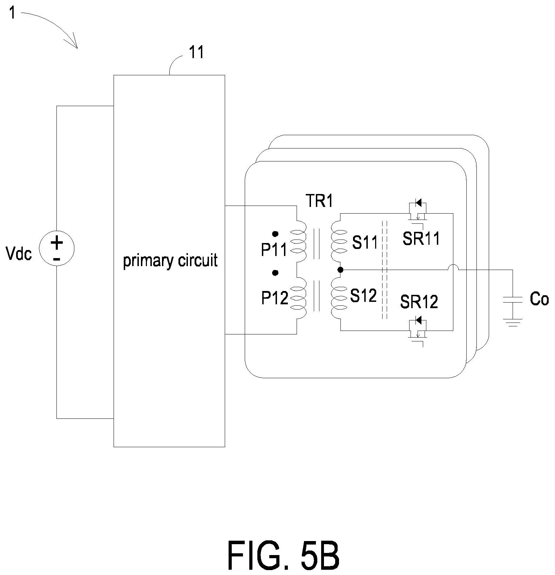

FIG. 5A and FIG. 5B schematically show more possible implementations of the DC-DC power supply of the present application. It is noted that the primary circuit 11 in FIG. 5A and FIGL 5B may adopt the circuit topology shown in FIG. 1 or FIG. 4. In addition, FIG. 5A shows a transformer set including a plurality of transformers TR1 to TRN, and FIG. 5B shows a plurality of transformer sets with each transformer set including one transformer.

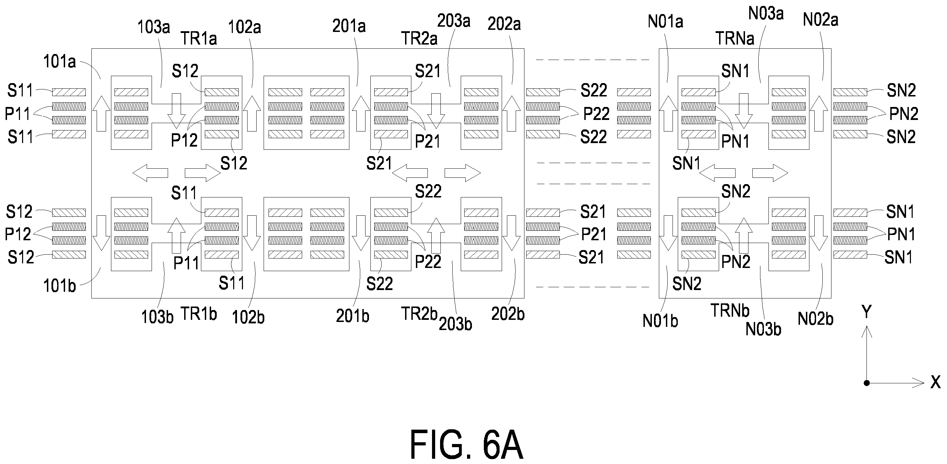

FIG. 6A schematically shows an implementation of the transformers TR1 to TRN of FIG. 5A and FIG. 5B. In FIG. 6A, the transformers TR1 to TRN are arranged along the first direction X, and each transformer is split into a first transformer and a second transformer stacked along the second direction Y. For example, the transformer TR1 is split into a first transformer TR1a and a second transformer TR1b. The first transformer TR1a includes a first side column 101a, a center column 103a and a second side column 102a, and the transformer TR1b includes a first side column 101b, a center column 103b and a second side column 102b. In the first transformer TR1a, the first secondary winding S11 and the first primary winding P11 are wound on the first side column 101a, and the second secondary winding S12 and the second primary winding P12 are wound on the second side column 102a. In the second transformer TR1b, the first secondary winding S11 and the first primary winding P11 are wound on the second side column 102b, and the second secondary winding S12 and the second primary winding P12 are wound on the first side column 101b.

Similarly, the transformer TR2 is split into a first transformer TR2a and a second transformer TR2b. The first transformer TR2a includes a first side column 201a, a center column 203a and a second side column 202a, and the second transformer TR2b includes a first side column 201b, a center column 203b and a second side column 202b. In the first transformer TR2a, the first secondary winding S21 and the first primary winding P21 are wound on the first side column 201a, and the second secondary winding S22 and the second primary winding P22 are wound on the second side column 202a. In the second transformer TR2b, the first secondary winding S21 and the first primary winding P21 are wound on the second side column 202b, and the second secondary winding S22 and the second primary winding P22 are wound on the first side column 201b. The transformer TRN is split into a first transformer TRNa and a second transformer TRNb. The first transformer TRNa includes a first side column N01a, a center column N03a and a second side column N02a, and the transformer TRNb includes a first side column N01b, a center column N03b and a second side column N02b. In the first transformer TRNa, the first secondary winding SN1 and the first primary winding PN1 are wound on the first side column N01a, and the second secondary winding SN2 and the second primary winding PN2 are wound on the second side column N02a. In the second transformer TRNb, the first secondary winding SN1 and the first primary winding PN1 are wound on the second side column N02b, and the second secondary winding SN2 and the second primary winding PN2 are wound on the first side column N01b. In addition, the directions of the flux caused by the secondary windings are also shown in FIG. 6A. In an embodiment, there may be some air gaps on the side and center columns.

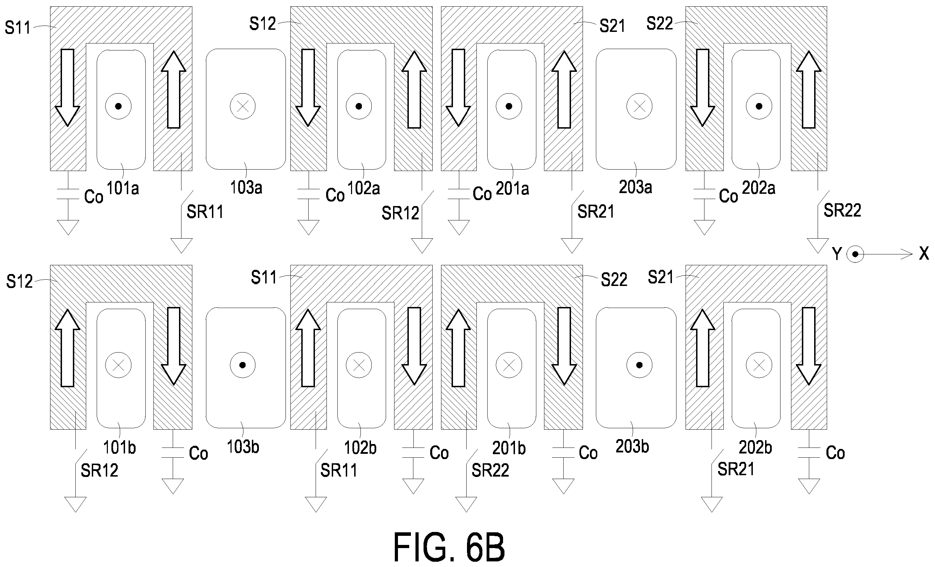

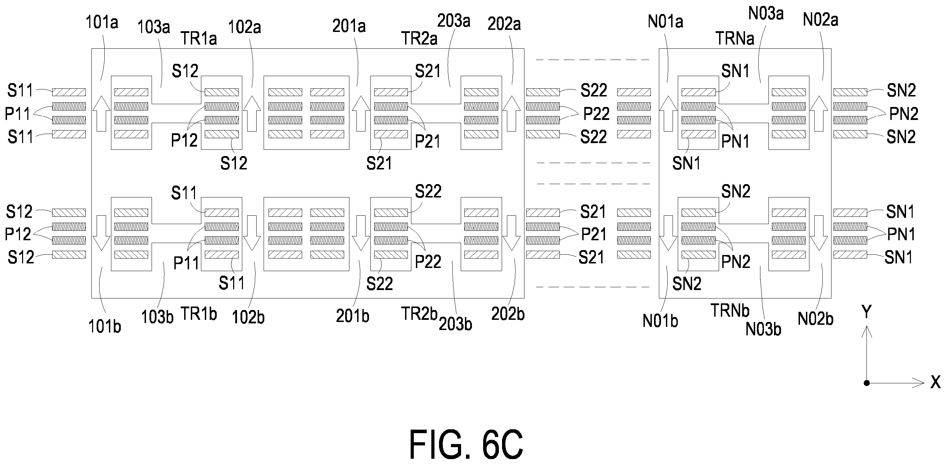

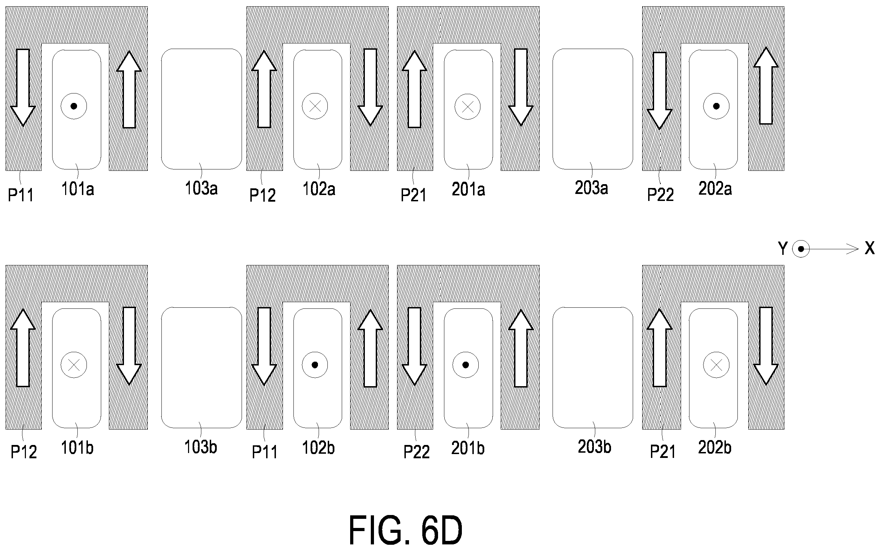

The sectional views of the secondary windings and columns in the first transformers TR1a and TR2a and the second transformers TR1b and TR2b of FIG. 6A are shown in FIG. 6B for illustrating the current and flux directions in the secondary windings and columns. In the first and second transformers arranged along the first direction X, taking the first transformers TR1a and TR2a as an example, the first secondary windings S11 and S21 and the second secondary windings S12 and S22 all have the same current direction. In the first and second transformer arranged along the second direction Y, taking the first transformer TR1a and the second transformer TR1b as an example, the first secondary windings S11 have opposite current directions, and the second secondary windings S12 have opposite current directions. Additionally, FIG. 6C shows the same implementation of FIG. 6A with the directions of the flux caused by the primary windings. The sectional views of the primary windings and columns in the first transformers TR1a and TR2a and the second transformers TR1b and TR2b of FIG. 6C are shown in FIG. 6D for illustrating the current and flux directions in the primary windings and columns. In two neighboring first or second transformers arranged along the first direction X, taking the first transformers TR1a and TR2a as an example, the first primary windings P11 and P21 have opposite current directions, the second primary windings P12 and P22 have opposite current directions, and the first and second primary windings of each first transformer have opposite current directions. In the first and second transformer arranged along the second direction Y, taking the first transformer TR1a and the second transformer TR1b as an example, the first primary windings P11 have the same current direction, and the second primary windings P12 have the same current direction.

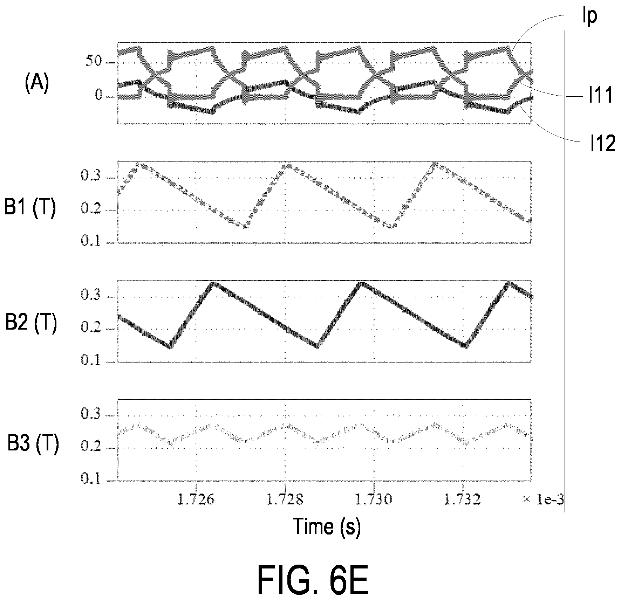

In addition, taking the transformer TR1 as an example, FIG. 6E schematically shows the current I11, the current I12, a current Ip flowing through the first and second primary windings P11 and P12, a flux density B1 of the first side column 101a, a flux density B2 of the second side column 102a, and a flux density B3 of the center column 103a in the implementation of FIGS. 6A-6D. The winding and core arrangement shown in FIGS. 6A- 6D leads to a lower peak volt-second across the center column which can lead to overall core volume reduction. This is evinced from the waveforms illustrated in FIG. 6E. From FIG. 6E, it can be observed that an almost 75% reduction in peak AC ripple flux is in the center column, which results in lower overall core loss and volume.

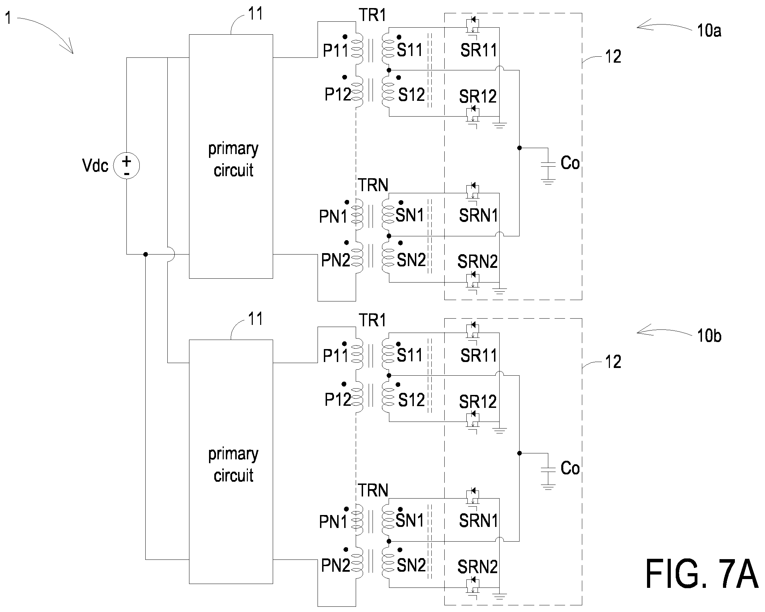

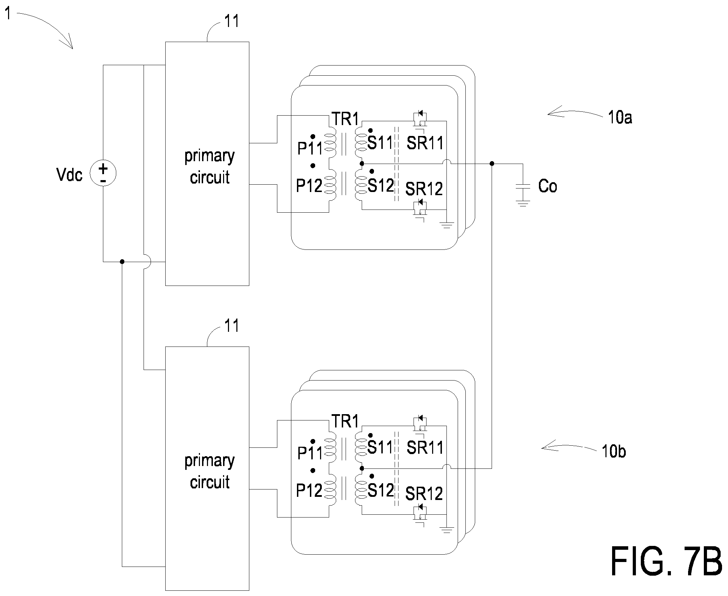

FIG. 7A is a schematic circuit diagram illustrating a DC-DC power supply according to another embodiment of the present disclosure. As shown in FIG. 7A, in this embodiment, the DC-DC power supply 1 includes two converters 10a and 10b interleaved with each other, and each converter includes a primary circuit 11, a plurality of transformers TR1-TRN and a secondary circuit 12. The circuit topology of the primary circuit 11, the plurality of transformers TR1-TRN and the secondary circuit 12 in each converter is similar with that shown in FIG. 5A, and thus detailed descriptions thereof are omitted herein. In addition, in this embodiment, each secondary circuit 12 of the converter 10a or 10b includes an output capacitor Co. While in another embodiment, two secondary circuits 12 of the converters 10a and 10b may share one single output capacitor Co, and correspondingly, the first and second secondary switches of the two secondary circuits 12 are connected to the same output capacitor Co. FIG. 7B schematically shows a variant of the implementation of FIG. 7A. In FIG. 7B, the transformers TR1-TRN of each converter are electrically connected in parallel.

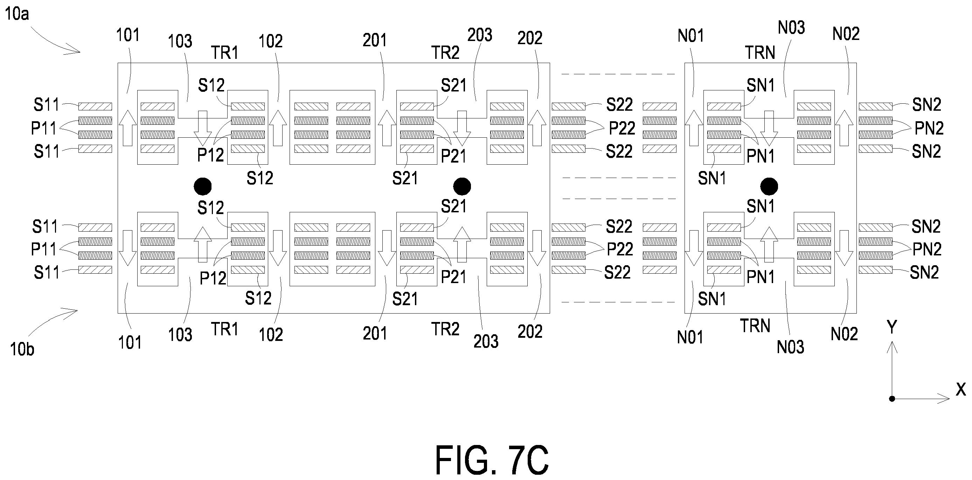

FIG. 7C schematically shows an implementation of the transformers TR1 to TRN of each converter of FIG. 7A or 7B. In FIG. 7C, the transformers TR1-TRN of the converter 10a are stacked on the transformers TR1-TRN of the converter 10b in the second direction Y, and the transformers TR1-TRN of each converter are arranged along the first direction X. In this implementation, perfect flux cancellation occurs at the center of the connection surface (shown as the black dot in FIG. 7C) of any two adjacent transformers of the converters 10a and 10b.

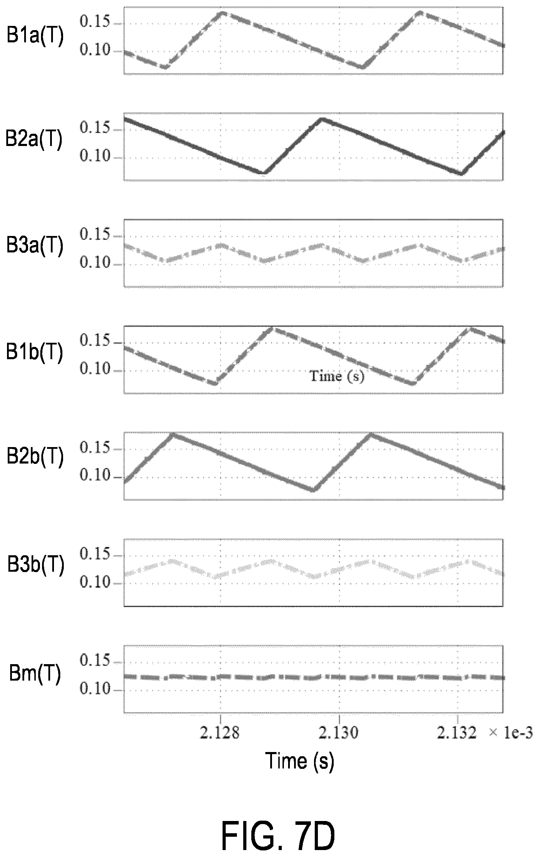

Taking the transformer TR1 as an example, FIG. 7D schematically shows a flux density B1a of the first side column 101 in the converter 10a, a flux density B2a of the second side column 102 in the converter 10a, a flux density B3a of the center column 103 in the converter 10a, a flux density B1b of the first side column 101 in the converter 10b, a flux density B2b of the second side column 102 in the converter 10b, a flux density B3b of the center column 103 in the converter 10b, and an flux density Bm of the plate between the transformers TR1 of the converters 10a and 10b in the implementation of FIG. 7C.

In addition, in the above embodiments, the windings are wound on the side columns, and each turn of windings is one of the first and second primary windings and first and second secondary windings. In another aspect of the present disclosure, the windings may be wound on the center columns, and each turn of windings may be formed by first and second primary windings or formed by first and second secondary windings.

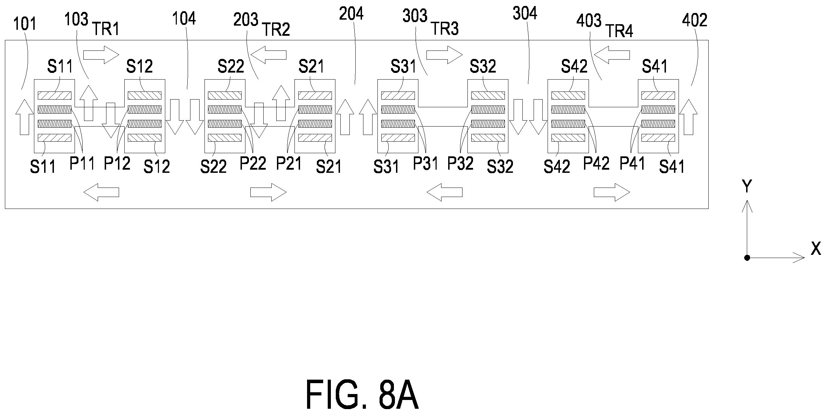

With regards to the circuit topology of the DC-DC power supply shown in FIGS. 5A and FIG. 5B, FIG. 8A schematically shows another implementation of the transformers in FIG. 5A or FIG 5B and takes transformers TR1, TR2, TR3 and TR4 as an example. In this embodiment, the side columns of two adjacent transformers are combined or integrated to form a common column. In particular, the second side column of the transformer TR1 and the first side column of the transformer TR2 are combined or integrated to form a common column 104, the second side column of the transformer TR2 and the first side column of the transformer TR3 are combined or integrated to form a common column 204, and the second side column of the transformer TR3 and the first side column of the transformer TR4 are combined or integrated to form a common column 304. In the transformer TR1, the first and second primary windings P11 and P12 are wound on the center column 103, with each turn being formed by the first primary winding P11 and the second primary winding P12. The first primary winding P11 is located between the first side column 101 and the center column 103, and the second primary winding P12 is located between the center column 103 and the common column 104. The first and second secondary windings S11 and S12 are wound on the center column 103, with each turn being formed by the first secondary winding S11 and the second secondary winding S12. The first secondary winding S11 is located between the first side column 101 and the center column 103, and the second secondary winding S12 is located between the center column 103 and the common column 104. In the transformer TR2, the first and second primary windings P21 and P22 are wound on the center column 203, with each turn being formed by the first primary winding P21 and the second primary winding P22. The second primary winding P22 is located between the common column 104 and the center column 203, and the first primary winding P21 is located between the center column 203 and the common column 204. The first and second secondary windings S21 and S22 are wound on the center column 203, with each turn being formed by the first secondary winding S21 and the second secondary winding S22. The second secondary winding S22 is located between the common column 104 and the center column 203, and the first secondary winding S21 is located between the center column 203 and the common column 204. According to FIG. 8A, the windings of the other transformers TR3 and TR4 are wound in the same way as the transformers TR1 and TR2. In the transformer TR3, the first and second primary windings P31 and P32 are wound on the center column 303, with each turn being formed by the first primary winding P31 and the second primary winding P32. The first primary winding P31 is located between the common column 204 and the center column 303, and the second primary winding P32 is located between the center column 303 and the common column 304. The first and second secondary windings S31 and S32 are wound on the center column 303, with each turn being formed by the first secondary winding S31 and the second secondary winding S32. The first secondary winding S31 is located between the common column 204 and the center column 303, and the second secondary winding S32 is located between the center column 303 and the common column 304. In the transformer TR4, the first and second primary windings P41 and P42 are wound on the center column 403, with each turn being formed by the first primary winding P41 and the second primary winding P42. The second primary winding P42 is located between the common column 304 and the center column 403, and the first primary winding P41 is located between the center column 403 and the second side column 402 of the transformer TR4. The first and second secondary windings S41 and S42 are wound on the center column 403, with each turn being formed by the first secondary winding S41 and the second secondary winding S42. The second secondary winding S42 is located between the common column 304 and the center column 403, and the first secondary winding S41 is located between the center column 403 and the second side column 402 of the transformer TR4. In addition, the directions of the flux caused by the secondary windings are also shown in FIG. 8A.

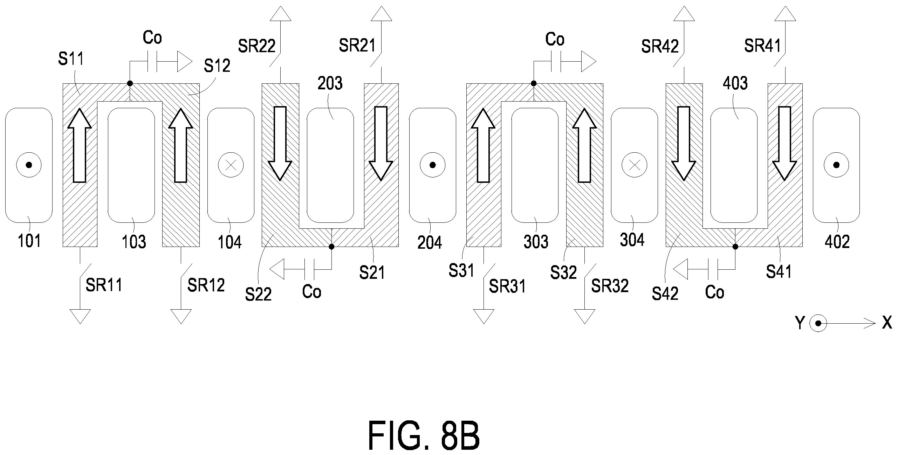

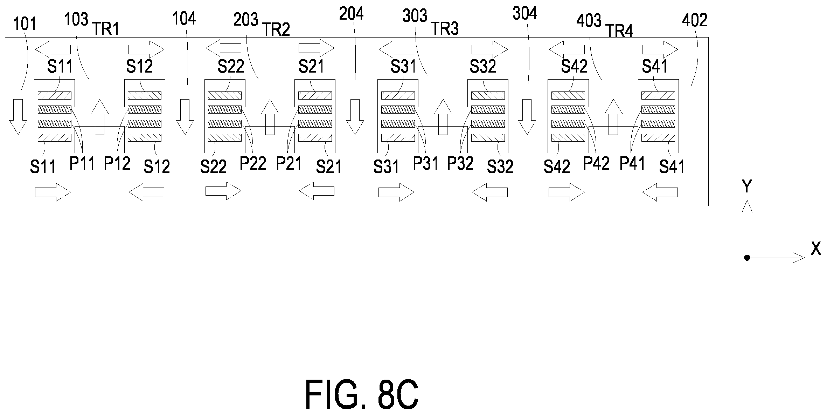

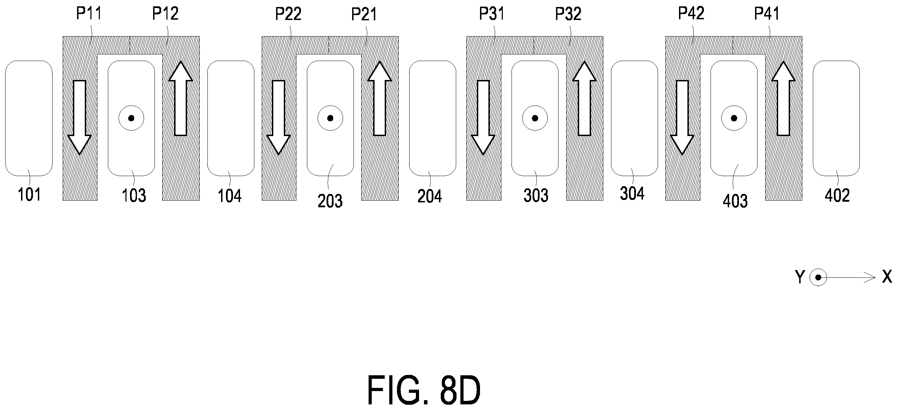

The sectional views of the secondary windings and columns in the transformers TR1-TR4 of FIG. 8A are shown in FIG. 8B for illustrating the current and flux directions in the secondary windings and columns. Additionally, FIG. 8C shows the same implementation of FIG. 8A with the directions of the flux caused by the primary windings. The sectional views of the primary windings and columns in the transformers TR1-TR4 of FIG. 8C are shown in FIG. 8D for illustrating the current and flux directions in the primary windings and columns.

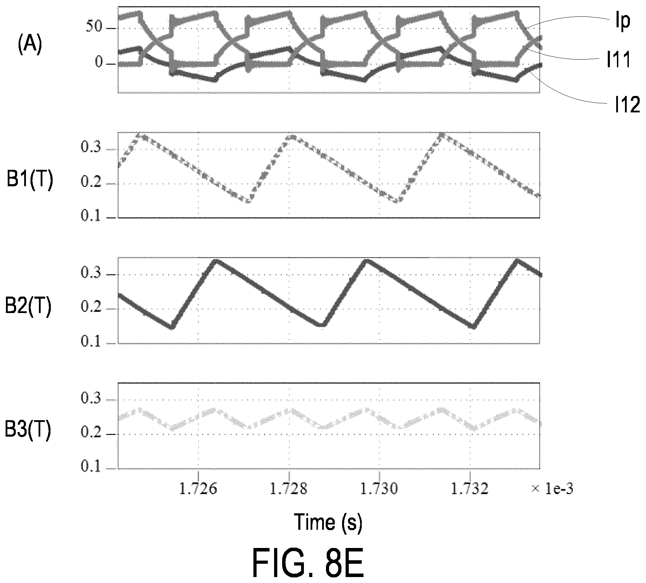

In addition, taking the transformer TR1 as an example, FIG. 8E schematically shows the current I11, the current I12, the current Ip, the flux density B1 of the first side column 101, the flux density B2 of the second side column (i.e., the common column 104), and the flux density B3 of the center column 103 in the implementation of FIGS. 8A-8D. The winding and core arrangement shown in FIGS. 8A-8D leads to a lower peak volt-second across the center column which can lead to overall core volume reduction. This is evinced from the waveforms illustrated in FIG. 8E. From FIG. 8E, it can be observed that an almost 75% reduction in peak AC ripple flux is in the center column, which results in lower overall core loss and volume.

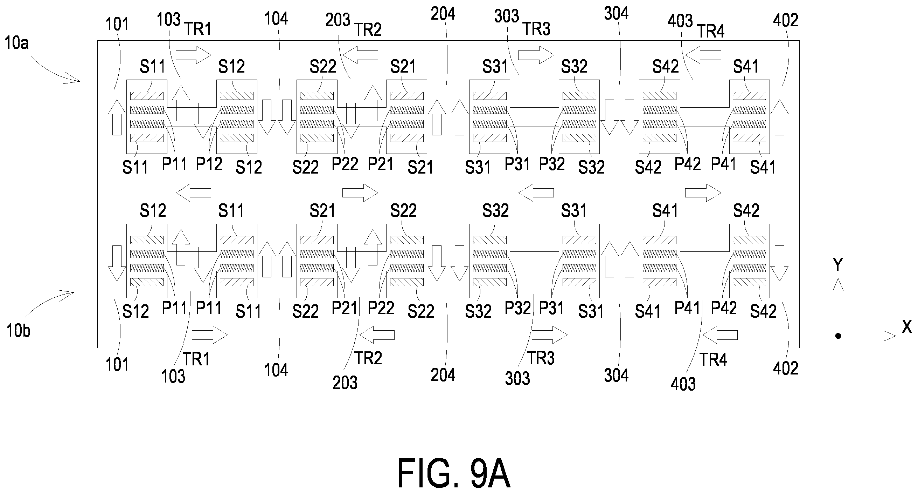

With regards to the circuit topology of the DC-DC power supply shown in FIGS. 7A and FIG. 7B, FIG. 9A schematically shows another implementation of the transformers in FIG. 7A or FIG 7B and takes transformers TR1, TR2, TR3 and TR4 of the converters 10a and 10b as an example. In FIG. 9A, the transformers TR1-TR4 of the converter 10a are stacked on the transformers TR1-TR4 of the converter 10b in the second direction Y, and the transformers TR1-TR4 of each converter are arranged along the first direction X. In this embodiment, the side columns of two adjacent transformers are combined or integrated to form a common column. In particular, in each of the converters 10a and 10b, the second side column of the transformer TR1 and the first side column of the transformer TR2 are combined or integrated to form a common column 104, the second side column of the transformer TR2 and the first side column of the transformer TR3 are combined or integrated to form a common column 204, and the second side column of the transformer TR3 and the first side column of the transformer TR4 are combined or integrated to form a common column 304.

In the converter 10a, the windings of the transformers TR1-TR4 are wound in the same way as that shown in FIG. 8A, and thus detailed descriptions thereof are omitted herein. While compared with the converter 10a, the locations of the first and second primary windings are exchanged with each other in the converter 10b, and also the locations of the first and second secondary windings are exchanged with each other in the converter 10b. In specific, in the transformer TR1 of the converter 10b, the second primary winding P12 is located between the first side column 101 and the center column 103, and the first primary winding P11 is located between the center column 103 and the common column 104. Further, the second secondary winding S12 is located between the first side column 101 and the center column 103, and the first secondary winding S11 is located between the center column 103 and the common column 104. In the transformer TR2 of the converter 10b, the first primary winding P21 is located between the common column 104 and the center column 203, and the second primary winding P22 is located between the center column 203 and the common column 204. Further, the first secondary winding S21 is located between the common column 104 and the center column 203, and the second secondary winding S22 is located between the center column 203 and the common column 204. The windings of the other transformers TR3 and TR4 in the converter 10b are wound in the same way as the transformers TR1 and TR2 in the converter 10b, and thus detailed descriptions thereof are omitted herein. In addition, the directions of the flux caused by the secondary windings are also shown in FIG. 9A.

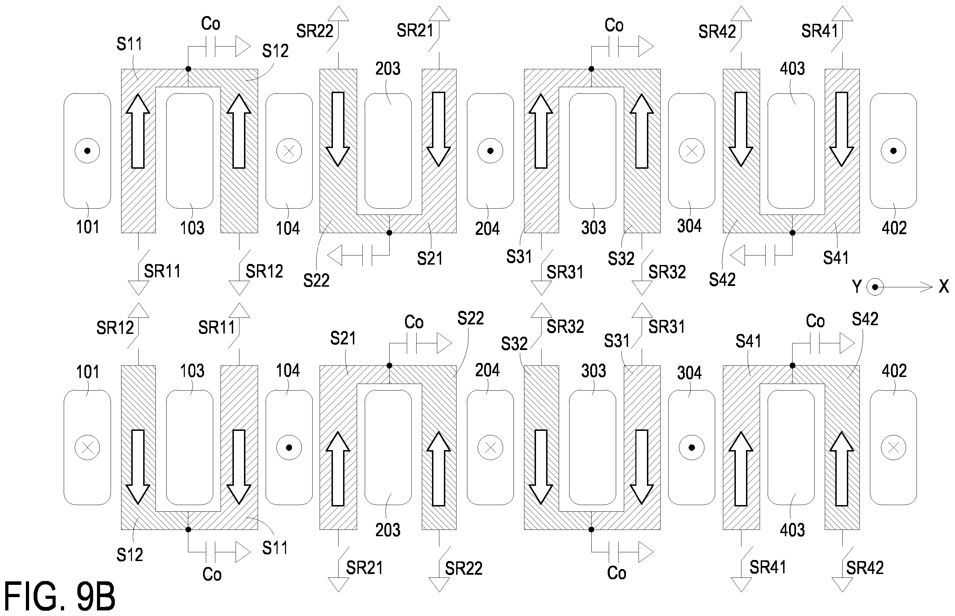

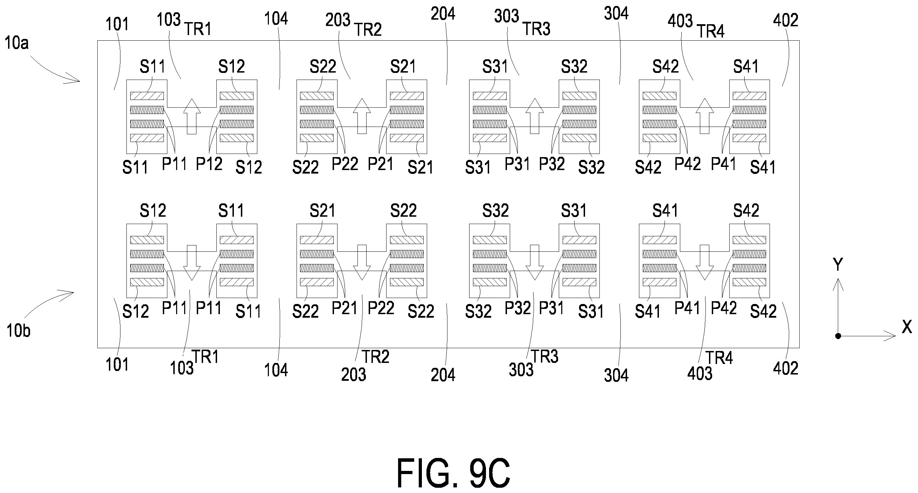

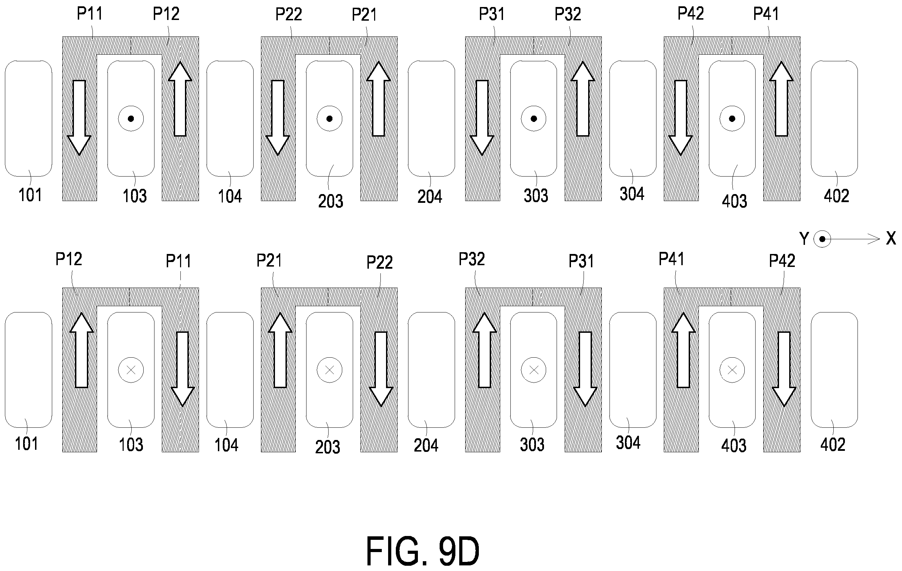

The sectional views of the secondary windings and columns in the transformers TR1-TR4 of the converters 10a and 10b of FIG. 9A are shown in FIG. 9B for illustrating the current and flux directions in the secondary windings and columns. Additionally, FIG. 9C shows the same implementation of FIG. 9A with the directions of the flux caused by the primary windings. The sectional views of the primary windings and columns in the transformers TR1-TR4 of the converters 10a and 10b of FIG. 9C are shown in FIG. 9D for illustrating the current and flux directions in the primary windings and columns.

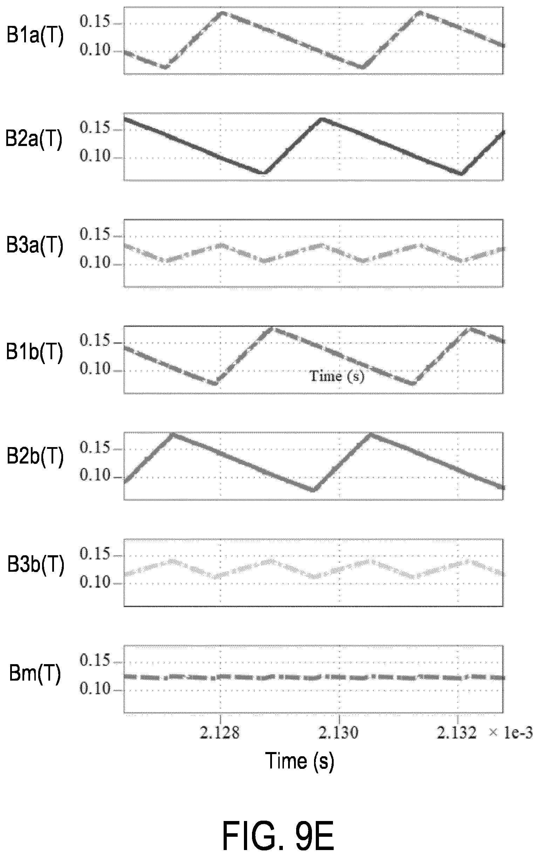

In addition, taking the transformer TR1 as an example, FIG. 9E schematically shows the flux density B1a of the first side column 101 in the converter 10a, the flux density B2a of the second side column (i.e., the common column 104) in the converter 10a, the flux density B3a of the center column 103 in the converter 10a, the flux density B1b of the first side column 101 in the converter 10b, the flux density B2b of the second side column (i.e., the common column 104) in the converter 10b, the flux density B3b of the center column 103 in the converter 10b, and the flux density Bm of the plate between the transformers TR1 of the converters 10a and 10b in implementation of FIG. 9A-9D.

## Claims

1. A DC-DC power supply (1), **characterized by** comprising:
a primary circuit (11) and a secondary circuit (12);
M transformer sets electrically connected in parallel between the primary circuit (11) and the secondary circuit (12), wherein each of the M transformer sets comprises N transformers (TR1, TR2), where M and N are positive integers,
wherein each said transformer (TR1) comprises a first primary winding (P11), a second primary winding (P12), a first secondary winding (S11), and a second secondary winding (S12), a connection node of the first secondary winding (S11) and the second secondary winding (S12) is electrically connected to an output capacitor (Co) of the secondary circuit (12), and each of the first secondary winding (S11) and the second secondary winding (S12) is electrically connected to a corresponding secondary switch (SR11, SR12) of the secondary circuit (12),
wherein the first and second primary windings (P11, P12) of the N transformers (TR1) in each of the M transformer sets are electrically connected in series, all M*N transformers (TR1, TR2) of the M transformer sets are arranged along a first direction (X), and each of the M*N transformers (TR1) comprises a first side column (101), a center column (103), and a second side column (102) arranged along the first direction (X) with each extending along a second direction (Y), which is perpendicular to the first direction (X).

2. The DC-DC power supply (1) according to claim 1, wherein the primary circuit (11) comprises a first switch bridge arm comprising a first primary switch (Q1) and a second primary switch (Q2) electrically connected in series, and a second switch bridge arm comprising a third primary switch (Q3) and a fourth primary switch (Q4) electrically connected in series, wherein the first switch bridge arm and the second switch bridge arm are electrically connected in parallel, and the first and second primary windings (P11, P12, P21, P22) of the N transformers (TR1, TR2) of each of the M transformer sets are electrically connected in series between a connection node of the first and second primary switches (Q1, Q2) and a connection node of the third and fourth primary switches (Q3, Q4).

3. The DC-DC power supply (1) according to claim 1 or 2, wherein the primary circuit (11) comprises a first half-bridge converter and a second half-bridge converter with parallel inputs, wherein the first half-bridge converter comprises a first capacitor bridge arm comprising a first capacitor (C1) and a second capacitor (C2) electrically connected in series, and a first switch bridge arm comprising a first primary switch (Q5) and a second primary switch (Q6) electrically connected in series, wherein the first capacitor bridge arm and the first switch bridge arm are electrically connected in parallel, wherein the second half-bridge converter comprises a second capacitor bridge arm comprising a third capacitor (C3) and a fourth capacitor (C4) electrically connected in series, and a second switch bridge arm comprising a third primary switch (Q7) and a fourth primary switch (Q8) electrically connected in series, wherein the second capacitor bridge arm and the second switch bridge arm are electrically connected in parallel,
wherein M is greater than 1, the M transformer sets are divided into a first group and a second group, the first and second primary windings (P11, P12) of the N transformers (TR1) in any of the first group of the M transformer sets are electrically connected in series between a connection node of the first and second primary switches (Q5, Q6) and a connection node of the first and second capacitors (C1, C2), and first and second primary windings (P21, P22) of the N transformers (TR2) in any of the second group of the M transformer sets are electrically connected in series between a connection node of the third and fourth primary switches (Q7, Q8) and a connection node of the third and fourth capacitors (C3, C4).

4. The DC-DC power supply (1) according to any one of the above claims, wherein any two adjacent transformers among the M*N transformers are regarded as a first transformer and a second transformer, wherein in the first transformer (TR1), the first primary winding (P11) and the first secondary winding (S11) are wound on the first side column (101), and the second primary winding (P12) and the second secondary winding (S12) are wound on the second side column (102), wherein in the second transformer (TR2), the first primary winding (P21) and the first secondary winding (S21) are wound on the second side column (202), and the second primary winding (P22) and the second secondary winding (S22) are wound on the first side column (201).

5. The DC-DC power supply (1) according to any one of the above claims, wherein each of the N transformers (TR1) of each of the M transformer sets is split into a first transformer (TR1a) and a second transformer (TR1b) stacked along the second direction (Y), the first primary winding (P11) and the first secondary winding (S11) are wound on the first side column (101a) of the first transformer (TR1a) and the second side column (102b) of the second transformer (TR1b), and the second primary winding (P12) and the second secondary winding (S12) are wound on the second side column (102a) of the first transformer (TR1a) and the first side column (101b) of the second transformer (TR1b).

6. The DC-DC power supply (1) according to any one of the above claims, wherein in each of the N transformers (TR1) of each of the M transformer sets, the first primary winding (P11) and the second primary winding (P12) are wound on the center column (103) with each turn being formed by the first primary winding (P11) and the second primary winding (P12), and the first secondary winding (S11) and the second secondary winding (S12) are wound on the center column (103) with each turn being formed by the first secondary winding (S11) and the second secondary winding (S12).

7. The DC-DC power supply (1) according to any one of the above claims, wherein any two adjacent transformers among the M*N transformers are regarded as a first transformer (TR1) and a second transformer (TR2), wherein in the first transformer (TR1), the first primary winding (P11) and the first secondary winding (S11) are located between the first side column (101) and the center column (103), and the second primary winding (P12) and the second secondary winding (S12) are located between the center column (103) and the second side column (102), wherein in the second transformer (TR2), the first primary winding (P21) and the first secondary winding (S21) are located between the center column (203) and the second side column (202), and the second primary winding (P22) and the second secondary winding (S22) are located between the first side column (201) and the center column (203).

8. The DC-DC power supply (1) according to any one of the above claims, wherein the second side column (102) of the first transformer (TR1) and the first side column (201) of the second transformer (TR2) are combined or integrated to form a common column (104).

9. The DC-DC power supply (1) according to any one of the above claims, wherein the primary circuit (11), the M transformer sets and the secondary circuit (12) form a converter, the DC-DC power supply (1) comprises two said converters regarded as a first converter (10a) and a second converter (10b), and all transformers (TR1-TRN) of the first converter (10a) are stacked on all transformers (TR1-TRN) of the second converter (10b) in the second direction (Y).

10. The DC-DC power supply (1) according to any one of the above claims, wherein the M*N transformers comprise current doubler transformers, and the M*N transformers and the secondary circuit (12) form current doubler rectifiers.

11. A transformer assembly configured for a DC-DC power supply (1) with a primary circuit (11) and a secondary circuit (12), the transformer assembly **characterized by** comprising:
M transformer sets electrically connected in parallel between the primary circuit (11) and the secondary circuit (12), wherein each of the M transformer sets comprises N transformers (TR1, TR2), where M and N are positive integers,
wherein each said transformer (TR1) comprises a first primary winding (P11), a second primary winding (P12), a first secondary winding (S11), and a second secondary winding (S12), a connection node of the first secondary winding (S11) and the second secondary winding (S12) is electrically connected to an output capacitor (Co) of the secondary circuit (12), and each of the first secondary winding (S11) and the second secondary winding (S12) is electrically connected to a corresponding secondary switch (SR11, SR12) of the secondary circuit (12),
wherein the first and second primary windings (P11, P12) of the N transformers (TR1) in each of the M transformer sets are electrically connected in series, all M*N transformers (TR1, TR2) of the M transformer sets are arranged along a first direction (X), and each of the M*N transformers (TR1) comprises a first side column (101), a center column (103), and a second side column (102) arranged along the first direction (X) with each extending along a second direction (Y), which is perpendicular to the first direction (X).

12. The transformer assembly according to claim 11, wherein any two adjacent transformers among the M*N transformers are regarded as a first transformer and a second transformer, wherein in the first transformer (TR1), the first primary winding (P11) and the first secondary winding (S11) are wound on the first side column (101), and the second primary winding (P12) and the second secondary winding (S12) are wound on the second side column (102), wherein in the second transformer (TR2), the first primary winding (P21) and the first secondary winding (S21) are wound on the second side column (202), and the second primary winding (P22) and the second secondary winding (S22) are wound on the first side column (201).

13. The transformer assembly according to claim 11 or 12, wherein each of the N transformers (TR1) of each of the M transformer sets is split into a first transformer (TR1a) and a second transformer (TR1b) stacked along the second direction (Y), the first primary winding (P11) and the first secondary winding (S11) are wound on the first side column (101a) of the first transformer (TR1a) and the second side column (102b) of the second transformer (TR1b), and the second primary winding (P12) and the second secondary winding (S12) are wound on the second side column (102a) of the first transformer (TR1a) and the first side column (101b) of the second transformer (TR1b).

14. The transformer assembly according to any one of claims 11 to 13, wherein in each of the N transformers (TR1) of each of the M transformer sets, the first primary winding (P11) and the second primary winding (P12) are wound on the center column (103) with each turn being formed by the first primary winding (P11) and the second primary winding (P12), and the first secondary winding (S11) and the second secondary winding (S12) are wound on the center column (103) with each turn being formed by the first secondary winding (S11) and the second secondary winding (S12).

15. The transformer assembly according to any one of claims 11 to 14, wherein any two adjacent transformers among the M*N transformers are regarded as a first transformer (TR1) and a second transformer (TR2), wherein in the first transformer (TR1), the first primary winding (P11) and the first secondary winding (S11) are located between the first side column (101) and the center column (103), and the second primary winding (P12) and the second secondary winding (S12) are located between the center column (103) and the second side column (102), wherein in the second transformer (TR2), the first primary winding (P21) and the first secondary winding (S21) are located between the center column (203) and the second side column (202), and the second primary winding (P22) and the second secondary winding (S22) are located between the first side column (201) and the center column (203).

16. The transformer assembly according to any one of claims 11 to 15, wherein the second side column (102) of the first transformer (TR1) and the first side column (201) of the second transformer (TR2) are combined or integrated to form a common column (104).

17. The transformer assembly according to any one of claims 11 to 16, wherein the primary circuit (11), the M transformer sets and the secondary circuit (12) form a converter, the DC-DC power supply (1) comprises two said converters regarded as a first converter (10a) and a second converter (10b), and all transformers (TR1-TRN) of the first converter (10a) are stacked on all transformers (TR1-TRN) of the second converter (10b) in the second direction (Y).

18. The transformer assembly according to any one of claims 11 to 17, wherein the M*N transformers comprise current doubler transformers, and the M*N transformers and the secondary circuit (12) form current doubler rectifiers.
